# EUROPEAN PATENT APPLICATION

(11) **EP 4 850 525 A1**
(43) Date of publication of application: **09.12.2026**
(21) Application number: 26183422.0
(22) Date of filing: 05.06.2026
(51) Int. Cl.: A01K 11/00, G06V 40/10

(54) **SYSTEMS AND METHODS FOR IDENTIFYING ANIMALS**

(30) Priority: 05.06.2025 GB 202508890
(71) Applicant: Hoofcount Ltd, Lancashire PR3 1RP (GB)
(72) Inventor: MARSH, Anthony, Preston, PR3 1RP (GB); SEQUEIRA, Brenton, Preston, PR3 1RP (GB)
(74) Representative: Mathys & Squire

(57) **Abstract**

Systems and methods for identifying an animal such as a cow in a population are disclosed. The systems comprise: a camera arranged to obtain an image of an ear tag on the cow when the cow is in a raceway, wherein the ear tag includes characters for identifying the cow, and wherein the camera is positioned to obtain the image from a location behind the cow; and an image analyser configured to obtain, from the camera, the image of the ear tag taken from behind the cow, and, based on the image, determine the characters on the ear tag to identify the cow. Methods of training an artificial neural network for identifying an animal in a population are also disclosed.

## Description

### Technical Field

The present disclosure relates to livestock identification, and in particular systems and methods for identifying cows in a population.

### Background

On farms, it is often necessary to monitor the health and behaviour of individual animals in a large population. For example, on dairy farms, it may be necessary to monitor the behaviour, welfare, and production of individual cows on the farm. In addition, in some countries such as the UK, the price of milk paid to a farmer by a wholesaler is dependent on the health of the herd as determined by an inspector. In this case each cow in a particular dairy herd may be assigned a health or mobility score by the inspector, with the price paid to the farmer dependent on the determined score.

For these purposes, and others such as the provision of medical treatment to particular cows, it is often necessary to quickly identify individual cows within a population or herd.

Cows typically have ear tags attached which include a string of unique alphanumeric characters which allows them to be identified manually by a farmer. However, such an approach is time consuming. In addition, the tags can sometimes be difficult to read. For example, the unique string of characters may be obscured by hair blocking it from view.

Existing approaches to addressing this issue typically involve the use of RFID tags attached to the cows' ears, in which cows can be identified from their tag when walking past a corresponding RFID reader. However, such RFID technology can often be unreliable in the context of livestock on a farm. For example, the RFID reader may not be able to accurately read a tag if there are several devices, e.g. tags, in close proximity - for example if there are multiple cows with RFID tags in close proximity to one another and the RFID reader. In addition, the radio signal of RFD tags can be affected by items in the farm environment such as iron fences, as well as by the power and quality of the tags and readers themselves. As a result, the distance at which it is possible to read an RFID is low, at around 20-30cm. Furthermore, such RFID solutions require the reader to be compatible with the tags used.

### Summary of Invention

Embodiments of the present invention aim to address the above problems and others by providing systems and methods for identifying cattle, in which images of the ear tag(s) on one or more cows are obtained from behind the cow. The obtained images are subsequently analysed to recognise the characters on the ear tag to identify the cow. The inventors in the present case have found that images of ID tags that are obtained from behind the cow may be easier to read than corresponding images in the front of the cow, for example because it is less likely that the identifying characters are obscured from view by the cow's hair. Such systems and methods may also be more efficient and accurate that methods of identification which involve the use of RFID tags.

Aspects of the invention are set out in the independent claims and optional features are set out in the dependent claims. Aspects of the invention may be provided in conjunction with each other, and features of one aspect may be applied to other aspects.

One aspect of the disclosure provides a system for identifying a cow in a population, the system comprising: a camera arranged to obtain an image of an ear tag on the cow when the cow is in a raceway, wherein the ear tag includes characters for identifying the cow, and wherein the camera is positioned to obtain the image from a location behind the cow; and an image analyser configured to obtain, from the camera, the image of the ear tag taken from behind the cow, and, based on the image, determine the characters on the ear tag to identify the cow. The image analyser may be configured to read the characters on the ear tag, e.g. to identify the cow, for example to recognise the characters and/or classify the characters, e.g. the numbers, on the tag. The image analyser may be configured to determine the characters on the ear tag by recognising the characters on the ear tag, for example by performing character recognition and/or by performing character (e.g. number) classification. The image analyser may be configured to identify the characters on the ear tag, e.g. to identify the cow. For example, determining the characters on the ear tag may comprise identifying the characters on the ear tag.

The characters may be alphanumeric characters, e.g. numbers. The characters may comprise a country code. The characters may comprise a unique string of characters, e.g. numbers, identifying the cow to which it is attached, e.g. in addition to the country code. The ear tag may be provided on either the left or right ear of the cow, or a pair of tags, e.g. comprising the same characters, may be provided on both ears of the cow. The camera may be configured to obtain an image from behind the cow of an ear tag on the left ear of the cow, the right ear of the cow, or both, e.g. to obtain an image of a pair of tags on both the left and right ears of the cow. The ear tag may comprise a front face and a rear face. One and/or both of the front and the rear face may comprise the characters. The camera may be arranged to obtain an image of at least the rear face of the tag.

It will be appreciated that the term 'behind the cow' as described herein may mean behind the cow relative to the direction it is facing and/or its direction of travel. Similarly, the rear face of the tag may correspond to the face of the tag that is facing the rear of the cow, for example so that it is visible or readable from a location behind the cow. It will be appreciated that the location of the camera behind the cow need not be directly behind the cow. For example, the location may be above the cow or below the cow, and/or may be laterally offset from the line defined by the lengthwise axis defined by the length of the cow itself and/or its direction of travel.

In some examples, the camera may be coupled or attached to the raceway. For example, the camera may be mounted onto the raceway. In some examples the system comprises attachment means for attaching the camera to the raceway. For example the attachment means may comprise a bracket. The attachment means may be configured to attach the camera to one or more of a post, pole, barrier or crossbar of the raceway.

The camera may comprise a lens and may comprise a shutter. The shutter may be a rolling shutter or a global shutter. The camera may be a video camera. The camera may be configured to capture greyscale images and/or colour images.

The camera may be connected to and/or in communication with the image analyser. The camera and image analyser may be connected by a wired connection and/or a wireless connection. The system may comprise the connection. The connection may be suitable for transferring the one or more images from the camera to the image analyser. In some examples the image analyser may be connected to the camera over a wide-area network, such as the internet. In other examples the image analyser 114 may be provided together with the camera in an integrated unit. As one example, such an integrated unit could be provided by a Luxonis ^{®} OAK camera, such as OAK-1 W PoE. In other examples the camera and image analyser may be separate units.

The image analyser may be provided by a computer, or portions or components of a computer, or a computing unit. The image analysing function of the image analyser may be carried by software executed on a computer. In some examples the image analyser may be provided by on carried by unit such as an Nvidia Jetson ^{®} unit.

The system may further comprise lighting means, such as a light source. The lighting means may be configured to illuminate at least a portion of the field of view of the camera. The lighting means may be configured to illuminate at least one of: the ear tag, the cow, and the raceway. The light source may comprise an LED. The light source may be provided with the camera, e.g. in an integrated unit. The light source may be attached or mounted to the raceway. In some examples the light source may be attached to the raceway using the same attachment means, e.g. bracket, as the camera.

The system may further comprise a cleaning apparatus configured to clean a lens of the camera. For example, the cleaning apparatus may comprise a transparent window. The transparent window may be provided in front of the lens of the camera. The transparent window may prevent or inhibit liquid and/or debris from covering the lens of the camera. The cleaning apparatus may also include a window clearing assembly, which may comprise one or more of: a movable member such as a wiper, an air blower, and a liquid dispenser. The moveable member may be configured to wipe the window to thereby clear the window. For example, the movable member may move along the surface of the window to push liquid and/or debris off the window. The air blower may be configured to blow air onto the window to thereby clear the window e.g. the air may dislodge debris from the window and/or may dry liquid on the window. The window clearing assembly may be configured to clear the window to improve the quality of the images of the ear tag obtained by the camera.

The raceway may comprise a first end for cows to enter the raceway, a second end opposite the first end. The raceway may comprise at least one barrier arranged between the first end and the second end. The camera may be positioned, e.g. attached to the at least one barrier. The camera may be positioned at the first end of the raceway, e.g. an entrance to the raceway. For example, the raceway may comprise an entry post, and the camera may be attached, e.g. mounted to, the entry post. The raceway may comprise one or more crossbars extending across the width of the raceway, e.g. at a height above the floor of the raceway to allow a cow to travel under the crossbars. The camera may be positioned on, e.g. attached or mounted to a crossbar, for example to the underside of the crossbar. The crossbar may extend between the tops of a pair of aligned vertical poles provided on either side of the raceway.

The camera (e.g. the lens of the camera) may be facing towards the second end of the raceway, e.g. the exit of the raceway. For example, the camera may be angled towards the second end of the raceway relative to the vertical. The camera may be positioned on the raceway above the cow and/or ear tag. The camera may be angled downwards relative to the horizontal.

The image analyser may comprise a machine learning algorithm trained to determine, e.g. recognise characters on an ear tag. The image analyser may comprise, or be configured to implement, a model configured (e.g. trained) to determine, e.g. recognise characters on an ear tag. The model may be a machine learning model.

The image analyser may comprise a further, e.g. first, model configured to detect the ear tag, e.g. prior to text determination/recognition. The first model may be configured to return bounding boxes, e.g. coordinates, indicating the location of the tag within the image obtained by the camera. The first model may be configured to crop the image of the ear tag to the region in which the tag is present. The image analyser may further comprise another e.g. second model, e.g. a text detection model. The second model may be configured to return bounding boxes, e.g. coordinates, indicating the location of the characters (e.g. numbers) within the cropped image of the tag. The second model may be configured to further crop the image of ear tag to the region in which the characters on the tag are present.

The model may be a third model e.g. a text recognition model. Alternatively, the model may comprise the text recognition model in addition to one or more of the first model and the second model. The model may be configured to determine/predict the text that is present on the tag. Alternatively or additionally, the model may be configured to classify the characters, e.g. numbers, on the tag, for example the model may be a text or number classification model.

The model and/or image analyser generally may be further configured to filter images or text once the text has been determined/predicted. For example the model may be configured to select text that corresponds to the expected text on the tag. For example, the model may be configured to select a particular string such as "UK" and a string of a six-digit numbers, as this may correspond to the text expected on the tag. The model may filter out or discard other text recognised or otherwise determined in the image.

The image analyser may comprise a further, e.g. intermediate model which may be provided downstream/after the tag detection (first) model, and which may be configured to determine at least one of: a) the angle of the tag, and b) whether the text on the tag is written left to right or left to right.

The camera may be configured to obtain a plurality of images of the ear tag from behind the cow, and the image analyser may be configured to select one of the plurality of images on which to perform character determination e.g. recognition.

The camera may be configured to obtain one or more images of a plurality of ear tags, each ear tag on a different cow, and the image analyser may be configured to determine, e.g. recognise, the characters on each of the ear tags based on the obtained one or more images.

The image analyser may be configured to identify each of a plurality of cows in real time as they travel along the raceway, based on the obtained images.

The camera may be configured to continuously image a region of the raceway. In response to a cow entering the region, the image analyser may be configured to identify the presence of an ear tag based on the images, and to determine, e.g. recognise, the characters on the ear tag.

The system may further comprise the raceway.

In some examples, the system or at least a part of the system may be handheld. For example, at least the camera may be handheld, and/or the camera and the image analyser may be handheld, e.g. in an integrated unit. In such examples, the camera may not be mounted onto the raceway. The camera may be configured to be held by a user to obtain the image, that is, the camera may be a handheld camera.

Another aspect of the disclosure provides a method of identifying individual cows in a cow population, the method comprising: obtaining at least one image of an ear tag on a cow in the cow population from behind the cow when the cow is in a raceway, wherein the ear tag comprises characters for identifying the cow, determining, for example recognising, the characters on the ear tag from the image to identify the cow.

Determining the characters on the ear tag may comprise using a machine learning algorithm trained to determine/recognise characters on an ear tag.

The method may further comprise obtaining a plurality of images of the ear tag from behind the cow, and selecting one of the plurality of images on which to perform character determination e.g. recognition.

The method may further comprise obtaining images of a plurality of ear tags, each on a different cow, and determining the characters on each of the ear tags based on the obtained images.

The method may comprise identifying each of a plurality of cows in real time as they travel along the raceway, based on the obtained images.

The method may comprise continuously imaging a region of the raceway, and, in response to a cow entering the region, identifying the presence of an ear tag based on the images, and determining the characters on the ear tag.

An apparatus may be provided that is configured to carry out any one or more, e.g. any combination, of the methods described above.

Another aspect of the disclosure provides a method of training an artificial neural network for identifying a cow in a population, the method comprising: obtaining an image of an ear tag on a cow taken from behind the cow; implementing, as a neural network, a model to determine, e.g. recognise, characters in the image; determining an identity of the cow based on the determined characters; obtaining an external indication of the identity of the cow; comparing the external indication of the identity of the cow with the determined identity of the cow; and modifying the model based on the comparison.

The method of training may further comprise obtaining a plurality of images of a corresponding plurality of ear tags on a corresponding plurality of cows, each image taken from behind the corresponding cow; implementing, as a neural network, a model to determine, e.g. recognise, characters in each of the images; determining an identity of each of the cows based on the determined characters; obtaining an external indication of the identity of each of the cows; comparing the external indication of the identity of each of the cows with the determined identity of the same cow; and modifying the model based on the comparisons.

Obtaining the image of the ear tag image may comprise obtaining the image from the camera, e.g. one or more of the cameras described herein. The external indication may be obtained from a data store, or a user device or user interface. The external indication may correctly identify the cow, e.g. it may correctly indicate the characters on the tag. The external indication may provide an association between the number of the tag of the/each cow and its identity. Comparing the external indication of the identity of each of the cows with the determined identity of the same cow may comprise determining whether the determined identity of the cow is the same as the external indication of the identity of the cow, for example determining whether the determined identity is the correct identity. Modifying the model may comprise updating the weightings, e.g. the weightings of/provided by the neural network. The model may be a machine learning model.

Another aspect of the disclosure provides a computer program product comprising computer program instructions configured to program a controller to control operation of a system to implement one or more of any of the methods described herein.

### Brief Description of Drawings

Some examples will now be described, by way of example only, which reference to figures, in which:
Figure 1A shows a plan view of an example system for identifying a cow;
Figure 1B shows a side view of the system of Figure 1A;
Figure 2 shows a side view of an alternative system for identifying a cow;
Figure 3A shows a front view of a cow with an ID tag;
Figure 3B shows a rear view of a cow with an ID tag;
Figure 4 is a flow diagram illustrating an example method of identifying a cow.

In the drawings like reference numerals are used to indicate like elements.

### Specific Description

Described below with reference to the figures are examples of systems and methods for identifying cows within a population, for example on a farm. In particular, example systems are described in which an ID tag worn by a cow is imaged by a camera from behind the cow, as the cow is walking down a raceway. Characters on the imaged tag are determined, for example recognised, by an image analyser, e.g. on a backend computer or one provided with the camera, to identify the cow. Images of ID tags that are obtained from behind the cow may be easier to read than corresponding images in the front of the cow, for example because it is less likely that the identifying characters are obscured from view by the cow's hair.

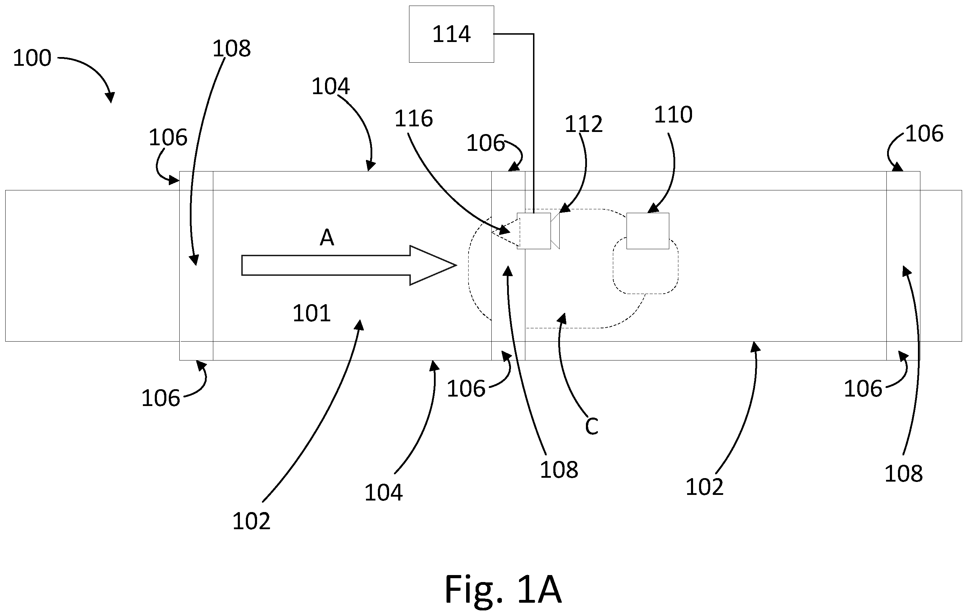

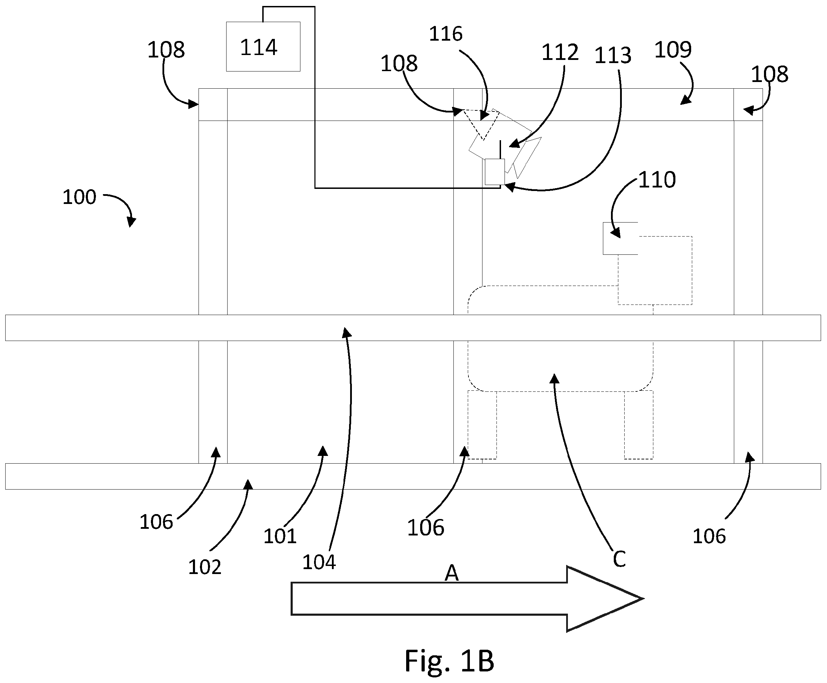

Figures 1A & 1B illustrate plan and side views respectively of an example system 100 for identifying cows. The system 100 includes a camera 112 for identifying a cow C as it travels along a raceway 101, in the direction indicated by arrow A. In particular the cow C is carrying an ear tag 110 with identifying characters, and the camera 112 is positioned to capture the identifying characters on the rear side of the tag 110, that is, from behind the cow C.

The raceway 101 comprises a pair of opposing side-barriers 104, each extending from an entrance of the raceway to an exit of the raceway, and defining a central passage between them along which the cows can walk. The side-barriers 104 may comprise one or more solid bars arranged on either side of the raceway 101. The width of the raceway 101 defined between the side-barriers 104 may wide enough that the cows in the population can fit in and travel down the raceway but not so wide that the cows can turn around within the raceway.

The raceway 101 further comprises a floor 102, between the opposing side-barriers 104, over which the cows walk. In some examples, the floor 102 may comprise or at least be partially provided by a foot bath (not shown), for cleaning the feet of the cows as they pass through the raceway 101. However, it will be appreciated that in other examples such a footbath is not present. The raceway 101 further comprises one or more vertical poles 106 that extend substantially upwards from the floor 102 and intersect the one or more side-barriers 104. The example raceway 101 shown in Figures 1A & 1B includes six vertical poles 106, with three poles spaced apart on each side of the raceway and longitudinally aligned with a corresponding pole on the opposite side.

The raceway further comprises a series of crossbars 108 each extending across the width of the raceway 101, between the tops of a pair of the aligned vertical poles 106 on either side of the raceway 101. The height of the vertical poles 106, and thus the height above the floor at which the crossbars are positioned, may be selected so as to not to impede the progress of the cows along the raceway (i.e. the height must be greater than that of the cows). However, said height must also be selected so that a camera 112 positioned on one of the crossbars 106 can obtain a good quality image of the ear tag 110 carried by the cow C travelling along the raceway 101 (i.e. it must be low enough to obtain good resolution images).

The vertical poles 106, crossbars 108, and side-barriers 104 may all be provided by solid bars, e.g. metal bars, although it will be appreciated that this is merely exemplary.

The camera 112 is attached to one of the crossbars 108, for example the middle crossbar 108 of the three shown in Figures 1A & 1B. In particular, the camera 112 is mounted onto the crossbar 108 using an attachment means 116 such as a bracket. For example, the camera 112 may be coupled to an underside of the crossbar 108. The camera is positioned and angled to capture the rear side of an ear tag 110 on a cow as they travel along the raceway 101. In particular, the camera 112 is angled towards the exit of the raceway 101 (relative to the vertical), such that the rear side of the ear tag 110 is in the field of view of the camera 112. The camera 112 is positioned on the crossbar 108 above the cow C as the cow C travels along the raceway, and so is angled downwards (relative to the horizontal) so that the ear tag 110 is in its field of view. For example, the camera 112 (i.e. its lens) may be angled at approximately 45° from the vertical, and may be positioned at a horizontal distance of approximately 150cm from the ear tag 110 when the ear tag 110 is in its field of view.

The camera 112 is configured to obtain one or more images of the ear tag 110, and may be a video camera configured to continuously obtain images of its field of view as cow C and/or multiple cows in the population travel along the raceway 101. The camera 112 may thereby be configured to capture images of the ear tags 110 of one or more cows as they enter the field of view of the camera 112. The camera 112 comprises a shutter which may be a rolling or a global shutter. The camera may be configured to obtain colour and/or black and white (greyscale) images. It has been found that text on greyscale images may be determined, for example read and recognised, more easily than on colour images.

The system 100 further comprises lighting means 113 for illuminating the cow C, tag 110 and/or raceway 101. The lighting means 113 comprises a light source such as an LED, and is configured to illuminate at least a part of the region within the field of view of the camera 112, to improve readability of the tag e.g. in low light conditions. The lighting means 113 may be mounted onto the raceway 101 using an attachment means such as a bracket, and it may be mounted onto the raceway 101 with the camera 112, e.g. using the same attachment means 116 as the camera 112.

The system 100 may also optionally include a cleaning apparatus (not shown), for cleaning the lens of the camera 112. For example, the cleaning apparatus may comprise a window provided in front of the lens of the camera, that is transparent to permit the camera 102 to obtain images therethrough, but which prevents liquid and debris from covering the camera 102 e.g. to keep the lens of the camera clean. The cleaning apparatus may also include a window clearing assembly comprising a movable member such as a wiper, and an air blower. The moveable member may be configured to wipe the window to thereby clear the window. For example, the movable member may move along the surface of the window to push liquid and/or debris off the window. The air blower may be configured to blow air onto the window to thereby clear the window e.g. the air may dislodge debris from the window and/or may dry liquid on the window. The window clearing assembly is configured to clear the window to improve the quality of the images of the ear tag obtained by the camera 112.

A liquid dispenser may be provided in addition to, or in place of, the air blower and/or the moveable member. The liquid dispenser may be configured to dispense a liquid onto the window (e.g. poured and/or forced under pressure). The dispensed liquid may dislodge debris from the window. The liquid dispenser may dispense a clear liquid onto the window which may dislodge debris and/or displace another fluid (e.g. a dirty fluid). For example, the other fluid (e.g. the dirty fluid) may transmit one or more light wavelengths detectable by a camera to a lesser degree than the dispensed liquid (e.g. the clear fluid). The other fluid may comprise mud (e.g. a solid comprising organic compounds) and/or water entrained with solids which may be splashed or dropped onto the window by the movement of the animals. The dispensed fluid may be water (e.g. tap water or the like) which is optically clearer than the other fluid.

The camera 112 is connected to an image analyser 114, and is configured to provide the obtained images to the image analyser 114. The camera 112 may be connected to the image analyser 114 by a wired connection and/or a wireless connection, wherein the connection is suitable for transferring the one or more images to the image analyser 114 for analysis. In some examples the image analyser 114 may be connected to the camera 112 over a wide-area network, such as the internet. In other examples the image analyser 114 may be provided together with the camera 112 in an integrated unit. The image analyser 114 may be provided by a computer, and for example its image analysing function (discussed below) may be carried by software executed on a computer.

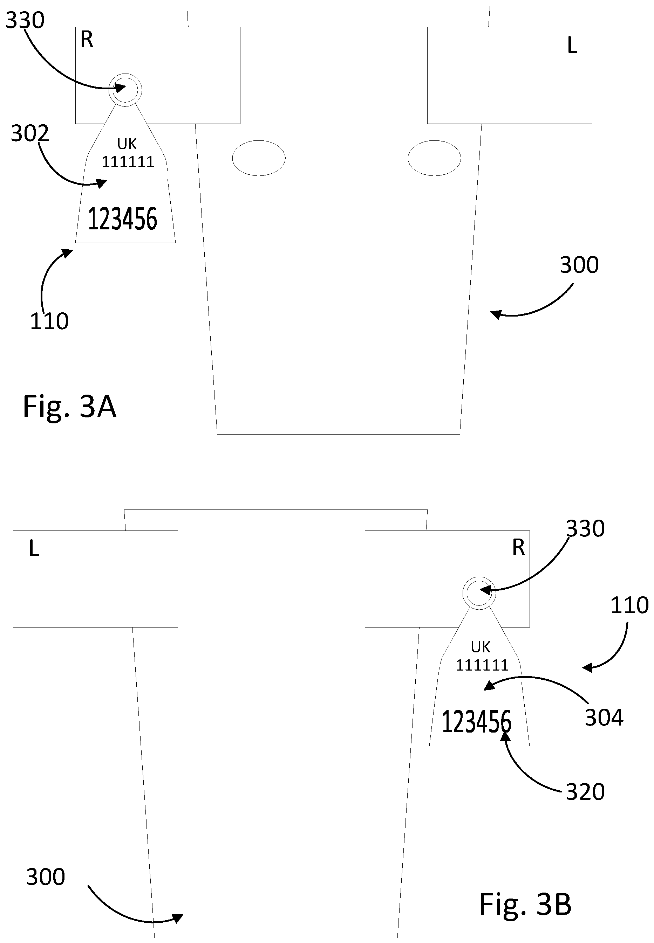

The image analyser 114 is configured to perform optical character recognition (OCR) on the obtained images of the ear tags 110, thereby converting the characters on the tags 110 (such as those shown in Figures 3A & 3B discussed below) into a machine-readable text format. The image analyser is configured to implement a model, such as a machine learning algorithm or model, which has been trained to recognise characters on ear tags, such as ear tag 110.

In one example configuration, the image analyser 114 comprises a first model (such as YOLO ('You Only Look Once') or others as will be apparent to the skilled person) configured to detect the ear tag 110. The first model is configured to return bounding boxes, e.g. coordinates, of where it has determined the tag 110 is within the image obtained by the camera 112. The first model is configured to then crop the image of the ear tag 110 to the region in which the tag 110 is present. The image analyser 114 further optionally comprises a second model, e.g. a text detection model. The second model is configured to carry out substantially the same process as the first model but to determine the location of text within the image, rather than the ear tag as a whole. In particular, the second model is configured to return bounding boxes, e.g. coordinates, of where it determines the text is located within the cropped image of the tag 112. The second model is configured to then further crop the image of ear tag 110 to the region in which the text on the tag is present. The image analyser 114 may further comprise a third, text recognition, model, and is configured to provide the cropped text to the text recognition model. The third model is configured to determine/predict the text/characters that is present on the tag. For example, the image analyser may comprise pretrained models, such as YOLO or Paddle OCR, configured to determine the text in the image. In one example, a YOLO algorithm, such as YOLOv-5 which may perform image recognition in a shorter period of time compared to other object detection algorithms. The image analyser 114 may be configured, once images are selected, to use architectures such as differentiable binarization network (DBNet) combined with a convolutional recurrent neural network (CRNN) to recognise numbers on the ear tags. However, it will be appreciated that this is merely exemplary, and in other examples, other architectures may be used. In some examples the third model may be or comprise a text (e.g. number) classification model.

The third model may be further configured to filter images or text once the text has been determined/predicted. For example, with reference to the tag shown in Figures 3A and 3B discussed below, the model may be configured to select text that corresponds to the expected text on the tag. For example, the model may be configured to select a particular string such as "UK" and a string of a six-digit numbers, as this may correspond to the text on the tag 110, and the model may filter out or discard other text recognised in the image.

It will be appreciated that the configuration and models of the image analyser 114 described above are merely exemplary. In some examples, the text detection model (i.e. second model described above) is not present, and the image analyser 114 is configured to carry out text recognition (e.g. number classification) on the cropped image provided by the ear tag detection model (the first model described above). In other examples, a combined single model may be configured to provide ear tag detection and text/character detection.

In other examples, the image analyser 114 may comprise a further, intermediate model provided downstream/after the tag detection (first) model and configured to determine a) the angle of the tag, and b) whether the text on the tag is written left to right or left to right. Functionalities a) and b) may be combined and provided by a single model, or each functionality may be provided by two separate models.

One or more of the models of the image analyser 114 described above may be a machine learning model, e.g. comprising a neural network configured to carry out a machine learning algorithm. Such a model may be pre-trained, based on previous training data, for example previous images of ear tags supplied to the model. However, the machine learning model(s) may in any case be modified, e.g. fine-tuned, based on data obtained as a result of the operation of the systems and methods described herein. For example, the text on the tags 110 used in the systems described herein may be a particular (e.g. unique) font, and the machine model(s) may be trained to more accurately recognise text of that font. A method of training an artificial neural network / machine-learning model may be provided that compares the output of the model, e.g. the recognised text, with the actual text on the tag, and the model may be updated based on the comparison.

In some examples, the image analyser 114 may further comprise a pre-processor for simplifying the character-recognition process on the one or more images of each ear tag 110. For example, the camera 112 may obtain multiple images of a particular cow and its ear tag 110 as it passes through the field of view, and the image analyser 114, e.g. using the pre-processor, may be configured to select a particular one of those images on which to perform character recognition.

For example, the image analyser 114 may be configured to filter out blurry images which would not yield a reliable recognition of the characters on the ear tag 110. In particular, the image analyser 114 may calculate a 'fuzzy degree', e.g. using a Laplace transform, with images less than a particular threshold fuzzy degree (e.g. 30) filtered out. The image analyser 114 may also filter out those images which have insufficient pixels (e.g. below a preselected threshold amount) or those in which the tag number is obscured. The image analyser 114, e.g. via the pre-processor, may identify a best image upon which a determination of the characters can be made (e.g. an image showing each tag 110 most clearly) and remove the remaining images, thereby advantageously reducing the number of images to the analysed by the image analyser 114.

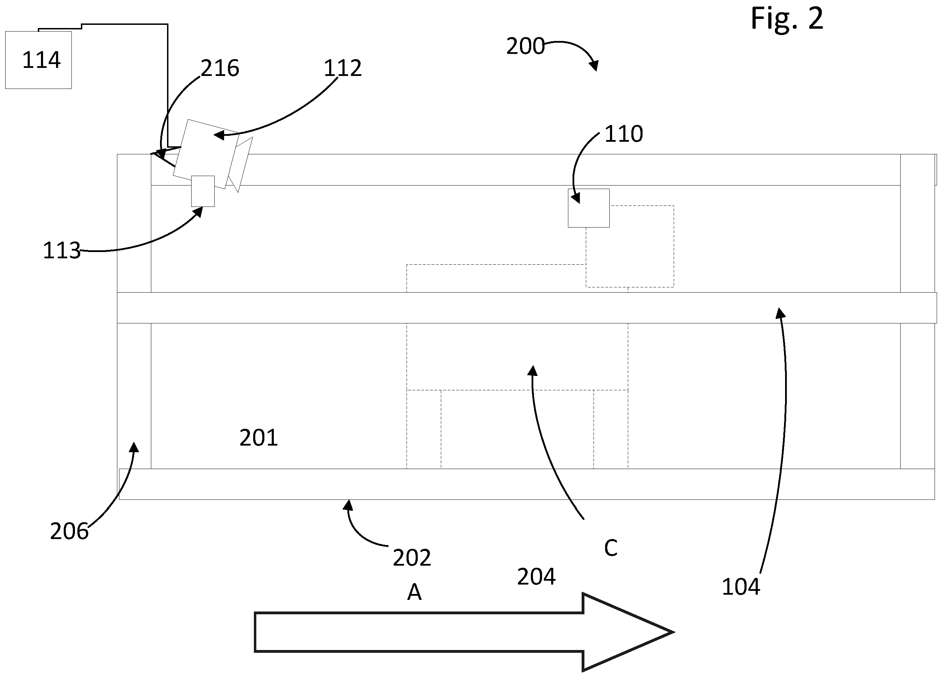

Figure 2 illustrates an alternative raceway in which a system for identifying cows may be implemented. As will be appreciated by the skilled reader, the system 200 shown in figure 2 has several features in common with the system 100 of figure 1 described above, and so for conciseness such features are not described again in detail.

The system 200 comprises a camera 112 configured to obtain an image of the rear of an ear tag 110 of a cow as it travels along a raceway 201, substantially as described above in relation to figure 1. The system also comprises a lighting means 113 for illuminating the field of view of the camera 112, including an ear tag 112 that passes through it, as described above in relation to figure 1. The system 200 further comprises an image analyser 114, connected to the camera 112 and to determine the characters in the images of the ear tag obtained from the camera 112, again substantially as described above. The system 200 may also optionally include a cleaning apparatus, for cleaning the camera 112, as described above in relation to figure 1.

The raceway 201 includes an entry post 206, arranged at the entry to the raceway 201.

For example two such entry posts 206 may be provided either side of the entry to the raceway 201.

The arrangement of system 200 differs from that of figure 1 described above in that the camera 112 is attached to one of the entry posts 206. The camera 112 is attached to the entry post 206 using an attachment means 216 such as a bracket. The attachment means 216 may be substantially the same as attachment means 116 used in the example of figure 1.

The camera 112 is arranged and angled to capture images of the ear tag 110 as the cow passes through its field of view. As with the figure 1 example, the camera 112 is facing towards the exit of the raceway 101. As the camera 112 is attached to an entry post 206 that is arranged on one side of the raceway, the camera 112 in this example may be angled towards the centre of the raceway 201, e.g. angled to the left or to the right relative to the direction of travel of the cow A. The camera 112 and image analyser 114 are configured to function substantially as described above in relation to figure 1, in order to identify the cows which travel down the raceway 201.

In operation of the systems of figures 1 and 2 described above, the rear face 304 of the tag 110 enters the field of view of the camera 112 as the cow travels along the raceway, such that the characters 320 can be imaged. The image analyser 114 can then analyse the image to determine the characters 320, and thereby identify the cow.

In an example mode of operation, as cows travel down the raceway 101, 201 the camera 112 continuously obtains images of its field of view. As each cow passes the camera 112 such that the rear of its ear tag 110 enters the field of view of the camera 112, the images obtained are transferred to the image analyser 114. The image analyser 114 carries out character recognition (OCR) on one or more of the images of each ear tag 110, to obtain machine-readable text of the characters on the tag 110 as described above. This data can be compared to stored data which associates each cow with the identifying characters on its tag, thereby identifying the cow. Data indicating the identification can be stored or presented to a user via a user device, e.g. a computer such as a computer of which the image analyser is a part.

It will be appreciated that this process can be repeated as each of a plurality of cows travels down the raceway 101, 201. In the case where a plurality of cows travel down the raceway 101, 201 each with their own ear tag 110, the camera 112 is configured to obtain one or more images of each of the plurality of ear tags. The image analyser 114 is configured to then determine the characters on each of the plurality ear tags based on the obtained one or more images of each ear tag. The image analyser is thus configured to identify each of a plurality of cows in real time as they travel along the raceway, based on the obtained images.

As described above, the camera 112 may be configured to continuously image a region of the raceway 101, 201 specifically that which is in its field of view. In such examples, the image analyser 114 may be configured to identify the presence of an ear tag based on the images. In particular, the image analyser 114 may be able to determine, based on the image, whether an ear tag that is to be read is present in the image. In the event that it is, the image analyser can go on to determine the characters on the ear tag, e.g. recognise using OCR as described above.

Figures 3A and 3B illustrate front and rear view respectively of a cow 300 carrying an ear tag 110 in one of its ears (not to scale). Such an ear tag may be imaged and analysed by the systems, e.g. cameras and image analysers, described above. The ear tag 110 is substantially "shovel-shaped" and comprises a front face 302 and a rear face 304. The rear face 304 and optionally the front face 302 include alphanumerical characters 320 for identifying the cow - e.g. a unique string of alphanumerical characters for each cow. The characters 320 may be printed as shown in Figures 3A&3B, or alternatively may be handwritten. The ear tag 110 is attached to the ear of the cow via attachment means 330, such as a pin which extends through the cow's ear.

In the example shown in Figures 3A & 3B, the cow 300 is carrying a single ear tag 110 in its right ear. However, in other examples the cow may carry the ear tag 110 in its left ear, or it may carry an ear tag (e.g. an identical ear tag) in both its left and right ears. Correspondingly, the camera, e.g. camera 112, may be arranged to image an ear tag on the right ear of the cow, the left ear of the cow, or image ear tags on both the right and left ears of the cow.

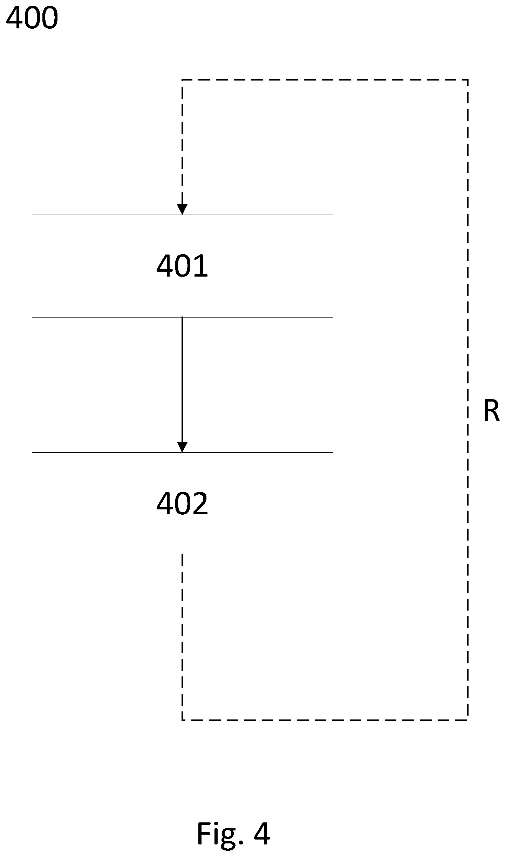

Figure 4 is a flow diagram illustrating an example method 400 of identifying cows in a population, for example using the systems described above. A first step 401 comprises obtaining at least one image of an ear tag on a cow in the cow population from behind the cow when the cow is in a raceway, wherein the ear tag comprises characters for identifying the cow. This step may be carried out by a camera attached to the raceway such as described above. Step 401 may comprise obtaining a plurality of images of the ear tag from behind the cow.

At a second step 402, the characters on the ear tag are determined from the one or more images, in order to identify the cow. This may comprise performing OCR on the one or more images obtained at step 401. As described above, determining the characters on the ear tag may comprise using an image analyser, such as image analyser 114 to carry out image recognition, for example using one or more models to recognise the text on the ear tag as described above in relation to Figures 1 and 2. As described elsewhere herein, recognising the characters on the ear tag may comprise using a machine learning algorithm trained to recognise characters on an ear tag.

As indicated by dashed arrow 'R', steps 401 and 402 may be repeated, for example for each cow that enters the raceway. As such, the method 400 may comprise obtaining images of a plurality of ear tags, each on a different cow, and determining the characters on each of the ear tags based on the obtained images. The method 400 may thus comprise identifying each of a plurality of cows in real time as they travel along the raceway, based on the obtained images.

It will be appreciated from the discussion above that the examples shown in the figures are merely exemplary, and include features which may be generalised, removed or replaced as described herein and as set out in the claims. With reference to the drawings in general, it will be appreciated that schematic functional block diagrams are used to indicate functionality of systems and apparatus described herein.

Figures 1A&B and Figure 2 illustrate two possible arrangements of a camera in/on a raceway, in which a camera is placed above a raceway and at the entrance to a raceway respectively. However, it will be appreciated that these are merely illustrative examples, and that the camera may be placed in any location on or relative to the raceway that enables the camera to image a cow's ear tag from behind. It will be appreciated, e.g. in relation to the Figure 1 example that the camera does not necessarily need to be placed at the centre of the race width, nor does it need to be mounted at the top of the race. In some other examples the camera may be mounted on the side of the race, e.g. mounted to a side post or barrier. In yet other examples, the camera may not be mounted onto the raceway at all. For example, the camera and/or the camera and image analyser together (i.e. the system) may be handheld. For example, a user (e.g. farmer) may hold the camera to obtain images of the ear tags as cows travel down the raceway.

It will be appreciated that the raceways described herein, e.g. raceways 101, 201, either may or may not be considered to be part of the corresponding systems that they are described with reference to, e.g. systems 100, 200. The systems described may be considered to comprise the raceway, in addition to the camera and image analyser (and optionally any attachment and connecting means). However, the system may alternatively be considered not to include the raceway itself, and to only comprise the camera and image analyser (and optionally any attachment and connecting means).

Although the apparatus, systems and methods described above have been described in relation to the identification of cows, it will be appreciated that they may also be suitable for identification of other animals, for example cattle generally, or other livestock such as other hooved mammals, or to any other animals to which a readable tag can be attached. Such identification of other animals using the apparatus, systems and methods described above also forms part of the present disclosure.

Although the cameras described above are typically described as being video cameras continuously capturing images from their field of view it will be appreciated that this is not essential. For example single or discrete image cameras could instead be used, and may be configured to capture images only when a cow is in the raceway or its field of view, for example as indicated by a proximity sensor provided in the raceway.

As will be appreciated by the skilled reader in the context of the present disclosure, each of the examples described herein may be implemented in a variety of different ways. Any features of any aspects of the disclosure may be combined with any of the other aspects of the disclosure. For example, method aspects may be combined with apparatus aspects, and features described with reference to the operation of particular elements of apparatus may be provided in methods which do not use those particular types of apparatus. In addition, each of the features of each of the examples is intended to be separable from the features which it is described in combination with, unless it is expressly stated that some other feature is essential to its operation. Each of these separable features may of course be combined with any of the other features of the examples in which it is described, or with any of the other features or combination of features of any of the other examples described herein. Furthermore, equivalents and modifications not described above may also be employed without departing from the invention.

Certain features of the methods described herein may be implemented in hardware, and one or more functions of the apparatus may be implemented in method steps. It will also be appreciated in the context of the present disclosure that the methods described herein need not be performed in the order in which they are described, nor necessarily in the order in which they are depicted in the drawings. Accordingly, aspects of the disclosure which are described with reference to products or apparatus are also intended to be implemented as methods and vice versa. The methods described herein may be implemented in computer programs, or in hardware or in any combination thereof. Computer programs include software, middleware, firmware, and any combination thereof. Such programs may be provided as signals or network messages and may be recorded on computer readable media such as tangible computer readable media which may store the computer programs in non-transitory form. Hardware includes computers, handheld devices, programmable processors, general purpose processors, application specific integrated circuits (ASICs), field programmable gate arrays (FPGAs), and arrays of logic gates.

Any processors used in the computer system (and any of the activities and apparatus outlined herein) may be implemented with fixed logic such as assemblies of logic gates or programmable logic such as software and/or computer program instructions executed by a processor. The computer system may comprise a central processing unit (CPU) and associated memory, connected to a graphics processing unit (GPU) and its associated memory. Other kinds of programmable logic include programmable processors, programmable digital logic (e.g., a field programmable gate array (FPGA), a tensor processing unit (TPU), an erasable programmable read only memory (EPROM), an electrically erasable programmable read only memory (EEPROM), an application specific integrated circuit (ASIC), or any other kind of digital logic, software, code, electronic instructions, flash memory, optical disks, CD-ROMs, DVD ROMs, magnetic or optical cards, other types of machine-readable mediums suitable for storing electronic instructions, or any suitable combination thereof. Such data storage media may also provide the data store of the computer system (and any of the apparatus outlined herein).

Machine learning elements described herein may be provided in a number of forms. This may include computer program instructions configured to program a computer processor to operate according to the instructions. The instructions may comprise a finalised machine learning element such that a user may not be able to alter or identify properties associated with the element, or the instructions may be arranged so that they can be overwritten so that continued use of the machine learning element may enable the code to be updated (so as to further develop the element). As will be appreciated in the context of the present disclosure, the specific nature of the machine learning element is not to be considered limiting, and this may vary depending on the nature of data to be processed. Any suitable system for the provision of a machine learning element may be utilised.

The machine learning element may comprise a neural network. A neural network may include a plurality of layers of neurons, where each neuron is configured to process input data to provide output data. It will be appreciated that any suitable process may be provided by any given neuron, and these may vary depending on the type of input data. Each layer of the network may include a plurality of neurons. The output of each neuron in one layer may be provided as an input to one or more (e.g. all) of the neurons in the subsequent layer. Each neuron may have an associated set of weightings which provide a respective weighting to each stream of input data provided to that neuron. Each path from a neuron to a neuron may be referred to as 'an edge'. Weightings may be stored at each neuron, and/or at each edge.

Such a neural network may have at least two variables which can be modified to provide improved processing of data. Firstly, a neuron's functionality may be selected or updated. Systems and methods of neural architecture search may be used to identify suitable functionalities for neurons in a network. Secondly, the weightings in the network may be updated, such as to alter priorities of different streams of input and output data throughout the network.

The machine learning element may be trained. For example, training the machine learning element may comprise updating the weightings. A plurality of methods may be used to determine how to update the weightings. For example, supervised learning methods may be used in which the element is operated on an input data for which there is a known correct output. That input/output is provided to the machine learning element after it has operated on the data to enable the machine learning element to update itself (e.g. modify its weightings). This may be performed using methods such as back propagation. By repeating this process a large number of times, the element may become trained so that it is adapted to process the relevant data and provide a relevant output. Other examples for training the machine learning element include use of reinforcement learning, where one or more rewards are defined to enable elements to be trained by identifying and utilising a balance between explorative and exploitative behaviour. For example, such methods may make use of bandit algorithms. As another example, unsupervised learning may be utilised to train the machine learning element. Unsupervised learning methods may make use of principal component and/or cluster analysis to attempt to infer probability distributions for an output based on characteristics of the input data (e.g. which may be associated with known/identified outputs).

The specifics of the machine learning element, and how it is trained, may vary, such as to account for the type of input data to be processed. It will be appreciated that different types of machine learning element may be suited to different tasks or for processing different types of data. It will also be appreciated that data may be cast into different forms to make use of different machine learning elements. For example, a standard neural network could be used for processing numerical input data, such as empirical values from obtained measurements. For processing images, convolutional neural networks may be used, which include one or more convolution layers. Numerical data may be cast into image form, such as by using a form of rasterization which represents numerical data in image form. A standard file format may be used to which the resulting image must adhere, and a convolutional neural network may then be trained (and used) to analyse images which represent the measurements (rather than values for the measurements themselves). Consequently, the specific type of machine learning element should not be considered limiting. The machine learning element may be any element which is adapted to process a specific type of input data to provide a desired form of output data (e.g. any element which has been trained/refined to provide improved performance at its designated task).

Other examples and variations of the disclosure will be apparent to the skilled addressee in the context of the present disclosure.

Embodiments are described in the following numbered clauses:
1. A system for identifying a cow in a population, the system comprising:
   a camera arranged to obtain an image of an ear tag on the cow when the cow is in a raceway, wherein the ear tag includes characters for identifying the cow, and wherein the camera is positioned to obtain the image from a location behind the cow; and
   an image analyser configured to obtain, from the camera, the image of the ear tag taken from behind the cow, and, based on the image, determine the characters on the ear tag to identify the cow.
2. The system of clause 1, further comprising attachment means configured to attach the camera to the raceway.
3. The system of clauses 1 or 2, further comprising lighting means configured to illuminate at least a portion of the field of view of the camera.
4. The system of any of clauses 1 to 3, further comprising a cleaning apparatus configured to clean the camera.
5. The system of any preceding clause, wherein the raceway comprises a first end for cows to enter the raceway, a second end opposite the first end, and at least one barrier arranged between the first end and the second end.
6. The system of clause 5, wherein the camera is facing towards the second end of the raceway.
7. The system of any preceding clause, wherein the image analyser is configured to determine characters on the tag by carrying out an image recognition process, and/or a number classification process.
8. The system of any preceding clause, wherein the image analyser comprises a machine learning algorithm trained to determine characters on an ear tag.
9. The system of any preceding clause, wherein the camera is configured to obtain a plurality of images of the ear tag from behind the cow, and the image analyser is configured to select one of the plurality of images on which to determine the characters.
10. The system of any preceding clause, wherein the camera is configured to obtain one or more images of a plurality of ear tags, each ear tag on a different cow, and wherein the image analyser is configured to determine the characters on each of the ear tags based on the obtained one or more images.
11. The system of clause 10, wherein the image analyser is configured to identify each of a plurality of cows in real time as they travel along the raceway, based on the obtained images.
12. The system of any preceding clause, wherein the camera is configured to continuously image a region of the raceway, and, in response to a cow entering the region, the image analyser is configured to identify the presence of an ear tag based on the images, and to determine the characters on the ear tag.
13. The system of any preceding clause, wherein the camera is mounted on the raceway.
14. The system of any preceding clause, further comprising the raceway.
15. The system of any of clauses 1 to 14, wherein the camera is configured to be held by a user to obtain the image.
16. A method of identifying individual cows in a cow population, the method comprising:
   obtaining at least one image of an ear tag on a cow in the cow population from behind the cow when the cow is in a raceway, wherein the ear tag comprises characters for identifying the cow,
   determining the characters on the ear tag from the image to identify the cow.
17. The method of clause 16, wherein determining the characters on the ear tag comprises using a machine learning algorithm trained to determine characters on an ear tag.
18. The method of clause 16 or 17, comprising obtaining a plurality of images of the ear tag from behind the cow, and selecting one of the plurality of images on which to determine the characters.
19. The method of any of clauses 16 to 18, comprising obtaining images of a plurality of ear tags, each on a different cow, and determining the characters on each of the ear tags based on the obtained images.
20. The method of clause 19, comprising identifying each of a plurality of cows in real time as they travel along the raceway, based on the obtained images.
21. The method of any of clauses 16 to 20, comprising continuously imaging a region of the raceway, and, in response to a cow entering the region, identifying the presence of an ear tag based on the images, and determining the characters on the ear tag.
22. An apparatus configured to carry out the method of any of clauses 16 to 21.
23. A method of training an artificial neural network for identifying a cow in a population, the method comprising:
   obtaining an image of an ear tag on a cow taken from behind the cow;
   implementing, as a neural network, a model to determine characters in the image;
   determining an identity of the cow based on the determined characters;
   obtaining an external indication of the identity of the cow;
   comparing the external indication of the identity of the cow with the determined identity of the cow; and
   modifying the model based on the comparison.
24. The method of clause 23, further comprising obtaining a plurality of images of a corresponding plurality of ear tags on a corresponding plurality of cows, each image taken from behind the corresponding cow;
   implementing, as a neural network, a model to determine characters in each of the images;
   determining an identity of each of the cows based on the determined characters;
   obtaining an external indication of the identity of each of the cows;
   comparing the external indication of the identity of each of the cows with the determined identity of the same cow; and
   modifying the model based on the comparisons.
25. A computer program product comprising computer program instructions configured to program a controller to control operation of a system to implement the method of any of clauses 16 to 24.

## Claims

1. A system for identifying a cow in a population, the system comprising:
a camera arranged to obtain an image of an ear tag on the cow when the cow is in a raceway, wherein the ear tag includes characters for identifying the cow, and wherein the camera is positioned to obtain the image from a location behind the cow; and
an image analyser configured to obtain, from the camera, the image of the ear tag taken from behind the cow, and, based on the image, determine the characters on the ear tag to identify the cow.

2. The system of claim 1, further comprising attachment means configured to attach the camera to the raceway.

3. The system of claims 1 or 2, further comprising lighting means configured to illuminate at least a portion of the field of view of the camera.

4. The system of any of claims 1 to 3, further comprising a cleaning apparatus configured to clean the camera.

5. The system of any preceding claim, wherein the raceway comprises a first end for cows to enter the raceway, a second end opposite the first end, and at least one barrier arranged between the first end and the second end, optionally wherein the camera is facing towards the second end of the raceway.

6. The system of any preceding claim, wherein the image analyser is configured to determine characters on the tag by carrying out an image recognition process, and/or a number classification process.

7. The system of any preceding claim, wherein the image analyser comprises a machine learning algorithm trained to determine characters on an ear tag.

8. The system of any preceding claim, wherein the camera is configured to obtain a plurality of images of the ear tag from behind the cow, and the image analyser is configured to select one of the plurality of images on which to determine the characters, and/or wherein the camera is configured to obtain one or more images of a plurality of ear tags, each ear tag on a different cow, and wherein the image analyser is configured to determine the characters on each of the ear tags based on the obtained one or more images, optionally wherein the image analyser is configured to identify each of a plurality of cows in real time as they travel along the raceway, based on the obtained images.

9. The system of any preceding claim, wherein the camera is configured to continuously image a region of the raceway, and, in response to a cow entering the region, the image analyser is configured to identify the presence of an ear tag based on the images, and to determine the characters on the ear tag.

10. The system of any preceding claim, further comprising the raceway, and/or wherein the camera is mounted on the raceway.

11. A method of identifying individual cows in a cow population, the method comprising:
obtaining at least one image of an ear tag on a cow in the cow population from behind the cow when the cow is in a raceway, wherein the ear tag comprises characters for identifying the cow,
determining the characters on the ear tag from the image to identify the cow.

12. The method of claim 11, wherein determining the characters on the ear tag comprises using a machine learning algorithm trained to determine characters on an ear tag, and/or the method comprising obtaining a plurality of images of the ear tag from behind the cow, and selecting one of the plurality of images on which to determine the characters, and/or the method comprising obtaining images of a plurality of ear tags, each on a different cow, and determining the characters on each of the ear tags based on the obtained images, optionally comprising identifying each of a plurality of cows in real time as they travel along the raceway, based on the obtained images.

13. The method claim 11 or 12, comprising continuously imaging a region of the raceway, and, in response to a cow entering the region, identifying the presence of an ear tag based on the images, and determining the characters on the ear tag.

14. A method of training an artificial neural network for identifying a cow in a population, the method comprising:
obtaining an image of an ear tag on a cow taken from behind the cow;
implementing, as a neural network, a model to determine characters in the image;
determining an identity of the cow based on the determined characters;
obtaining an external indication of the identity of the cow;
comparing the external indication of the identity of the cow with the determined identity of the cow; and
modifying the model based on the comparison.

15. A computer program product comprising computer program instructions configured to program a controller to control operation of a system to implement the method of any of claims 11 to 14.
